Europäisches Patentamt

European Patent Office

Office européen des brevets

(11) Veröffentlichungsnummer: **0 498 008 A1**

## EUROPÄISCHE PATENTANMELDUNG

(21) Anmeldenummer: **91101592.3**

(22) Anmeldetag: **06.02.91**

(51) Int. Cl.⁵: **B60J 5/04**

(43) Veröffentlichungstag der Anmeldung:
**12.08.92 Patentblatt 92/33**

(84) Benannte Vertragsstaaten:
**DE FR SE**

(71) Anmelder: **Austria Metall Aktiengesellschaft**

**A-5282 Braunau am Inn(AT)**

(72) Erfinder: **Garnweidner, Peter**

**A-5112 Lamprechtshausen 429a(AT)**

(74) Vertreter: **WILHELMS, KILIAN & PARTNER**
**Patentanwälte**
**Eduard-Schmid-Strasse 2**
**W-8000 München 90(DE)**

(54) Rammschutz für Türen und Seitenwände von Kraftfahrzeugen.

(57) Der Rammschutz (3) ist in horizontaler Lage parallel zur Außenverblechung (1) eingebaut, wobei er aus wenigstens zwei im Abstand übereinander angeordneten Profilen (5, 5') besteht, welche wenigstens im Bereich ihrer Enden miteinander verbunden sind (6, 6').

Fig. 2

## RAMMSCHUTZ FÜR TÜREN UND SEITENWÄNDE VON KRAFTFAHRZEUGEN

Die Erfindung bezieht sich auf einen Rammschutz für Türen und Seitenwände von Kraftfahrzeugen, der in horizontaler Lage parallel zur Außenverblechung eingebaut ist.

Bei Kraftfahrzeugtüren, die eine geringe Dicke aufweisen oder die sehr viele Einbauaggregate in ihrem Innenraum besitzen, ist nur geringer Platz für den Aufprallträger vorhanden. Dadurch kann nur ein Träger verwendet werden, der einen sehr niedrigen Querschnitt in der Ebene normal zur Türaußenfläche besitzt. Durch diesen geringen Querschnitt, muß er sich über eine breite Zone der Türfläche erstrecken, um die nötige Festigkeit zu erzielen. Naturgemäß ist durch eine solche Formgebung mehr Material für den Träger notwendig, als bei einem Träger mit quadratischem oder kreisförmigem Querschnitt, was zu höherem Gewicht führt. Es ist daher versucht worden, mehrere schlanke horizontale Träger untereinander in der Türkonstruktion anzuordnen.

Eine solche Bauweise wird in der US-PS 3,868,141 beschrieben, bei der mehrere vertikale Profile übereinander an den Türholmen befestigt sind. Bei dieser Bauweise ist jeder Träger für sich an der Türkonstruktion befestigt. Es besteht keinerlei Verbindung der Träger untereinander. Dies bewirkt, daß bei einem Unfall die Verformung zwischen den Trägern nicht gekoppelt ist. Die Übertragung von Kräften zwischen den einzelnen Trägern erfolgt nur über die Türholme, an denen jeder der Träger befestigt ist. Somit kann es geschehen, daß zwei Träger auseinandergebogen werden und die zwischen ihnen wirkenden Kräfte den Türholm so stark belasten, daß dieser zum Bruch kommt. Beim Ausreißen eines Trägers aus seiner Halterung kann dieser nicht mehr am Kollisionsvorgang energieverzehrend teilnehmen und es besteht außerdem die Gefahr, daß er in den Innenraum gelangt und einen Insaßen verletzt.

Die Montage solcher Systeme ist zeitraubend, da jeder der Träger für sich positioniert und befestigt werden muß. Es ist aber andererseits auch nicht vorteilhaft, einen einzigen sehr breit ausgeführten Träger zu verwenden, da dieser schwer den Konturen der Türholme anzupassen ist, aus Festigkeitsgründen Längssteifen oder Wände haben muß, weiters einen Teil der Innenseite der Außenhaut verdeckt und daher erst nach dem Lakkieren der Tür eingebaut werden kann. Diesen Träger mit einzelnen Ausnehmungen auszuführen, hat sich als unwirtschaftlich herausgestellt, da ein großer Bearbeitungsaufwand nötig ist und die Lackierbarkeit der Außenhaut trotzdem nicht vollständig möglich ist.

Um die beschriebenen Nachteile zu beseitigen, haben wir erfindungsgemäß einen Rammschutz ausgeführt, daß er aus wenigstens zwei im Abstand übereinander angeordneten Profilen besteht, welche wenigstens im Bereich ihrer Enden miteinander verbunden sind.

Dadurch können die zwischen den einzelnen Holmen des Trägers im Kollisionsfall auftretenden Kräfte direkt zwischen den Profilen im Träger wirken und werden die Kräfte nicht über die Türholme geleitet, wodurch deren Belastung geringer und die Gefahr eines Bruches der Türholme oder des Ausreißens eines einzelnen Holmes vermieden ist. Dadurch, daß der Rammschutz aus mehreren vertikalen untereinanderliegenden Profilen aufgebaut ist, die miteinander verbunden sind, ist auch eine leichtere Montage gegeben, da der Rammschutz lediglich einmal positioniert werden muß. Die Lakkierung der Tür kann auch nach der Montage erfolgen. Wie bei einem einzigen, sehr breiten Träger, erfolgt die Abstützung der Außenhaut über einen großen Bereich, wodurch im Kollisionsfall eine gute Abstützung der Türaußenhaut und Einleitung der Kollisionskräfte erfolgt. Die Eindringhöhe eines kollidierten Gegenstandes kann bei gleichbleibend guter Schutzwirkung des Rammschutzes weit streuen.

Es hat sich weiters als erfindungsgemäß günstig herausgestellt, daß der Rammschutz einstückig ausgeführt ist und der zwischen den einzelnen Profilen befindliche Teil bis auf den Bereich der Enden der Profile entfernt ist.

Dieser Rammschutz ist aus einem einzelnen Strangpreßprofil hergestellt, bei dem das die beiden Profile verbindende Stück bis auf den Bereich der Randzonen durch Ausfräsen oder Ausstanzen entfernt ist. Dadurch ist eine sehr feste, leichte, einstückige Bauweise des Rammschutzes erzielbar. Durch den Entfall von Schweißnähten sind sowohl die für die Herstellung aufgewendete Arbeitszeit, als auch mögliche Fehlerquellen weitaus niedriger, als beim herkömmlichen mehrstückigen, durch Schweißen oder Verschrauben zusammengefügten Rammschutz.

Es ist vorteilhaft, daß die Befestigung am Tür- bzw. Fahrzeugaufbauholm an dem zwischen den Profilen im Endbereich angeordneten Teil erfolgt.

Diese Befestigung an den Türholmen ist sehr einfach. Die Tolerierung zwischen den einzelnen Befestigungspunkten am Türholm ist weniger kompliziert, da sich die Anzahl der Befestigungspunkte an den Enden des Rammschutzes reduziert. So benötigt ein Rammschutz mit zwei übereinander angeordneten Profilen lediglich einen Befestigungspunkt an jeder Seite und ein Rammschutz mit drei übereinander angeordneten Profilen nur zwei Befestigungspunkte an jeder Seite. Durch diese Bauweise ist auch eine sehr leichte Anpassung der Auflagerform des Rammschutzes an die jeweilige kooperierende Kontur des Türholmes gegeben.

Es hat sich weiters als günstig gezeigt, daß der zwischen den Profilen angeordnete Teil wenigstens an einem Ende in Längserstreckung die Profile überragt und an diesem überragenden Teil die Verbindung mit dem Fahrzeugaufbau bzw. Türholm stattfindet.

Dadurch ist die Zone der Befestigung gegenüber den übrigen Teil des Rammschutzes biegeweicher, wodurch eine gute Verformbarkeit im Kollisionsfall gegeben ist. Durch dimensionsmäßige Auslegung der Stärke dieser Zone zur Gesamtsteifigkeit der Tür, ist es möglich, bei geringen Verformungswegen der Türaußenhaut, die Türholme unbeschädigt zu erhalten, wodurch die Reparaturkosten geringer bleiben. Falls es zum Verdrehen des Rammschutzes im Kollisionsfall kommt, wird ein Großteil der Verdrehbewegung in dieser Zone aufgenommen und die verbleibende Belastung auf dem Türholm bewirkt keine verbleibende Verformung an ihm.

Es ist günstig, daß der die Profile des Rammschutzes in Längserstreckung überragende Teil im Winkel zur Längserstreckung steht und nach außen weist.

Dadurch kann die Bauweise des Rammschutzes kompakt ausgeführt werden. Er kann direkt an der Türaußenhaut angeordnet sein. Die Montage kann trotzdem einfach erfolgen, da durch das Abwinkeln der Endzonen genügend Platz für die Montage gegeben ist. Die Türholme benötigen keine Ausnehmung für die Auflager, auch wenn die Befestigung des Rammschutzes an der Außenseite des Türholms erfolgt. Zusätzlich kann durch geeignete Wahl des Winkels eine gute Verteilung zwischen Zugbelastungen, die in der Türebene wirken und normal zur Türebene auftretenden Druckbelastungen erfolgt, was zusätzlich eine Steuerung des Deformationsvorganges im Kollisionsfall ermöglicht.

Es ist auch eine solche Ausführung des Rammschutzes möglich, daß die Tangenten an eine jeweils vertikale Außenseite der Profile und die vertikale Außenseite des, die Profile verbindenden Teiles in einer Ebene liegen.

Dadurch kann die Abstützung der Türaußenhaut durch den Rammschutz bis an die vertikalen Türholmen erfolgen. Diese Bauweise ermöglicht sehr einfache Profilformen, die am günstigsten als Strangpreßprofile ausgeführt werden. Durch zusätzliche Einlagen von Kunststoff zwischen den Rammschutzträgerholmen und der Türaußenhaut ist eine elastische Unterstützung der Haut möglich, wodurch es bei kleinen Deformationen zu keinen Berührungen zwischen Trägerholmen und Blech kommt und dadurch im weiteren Betrieb der Tür keine unangenehmen Schepper- oder Klopfgeräusche auftreten. Ein solcher Träger ist sehr einfach herzustellen, da lediglich der Verbindungsteil in der gewünschten Form ausgeschnitten und Befestigungslöcher für die Anordnung an den Holmen angebracht werden müssen.

Die Erfindung wird anhand der nachstehenden Zeichnungen erläutert. Es zeigen:

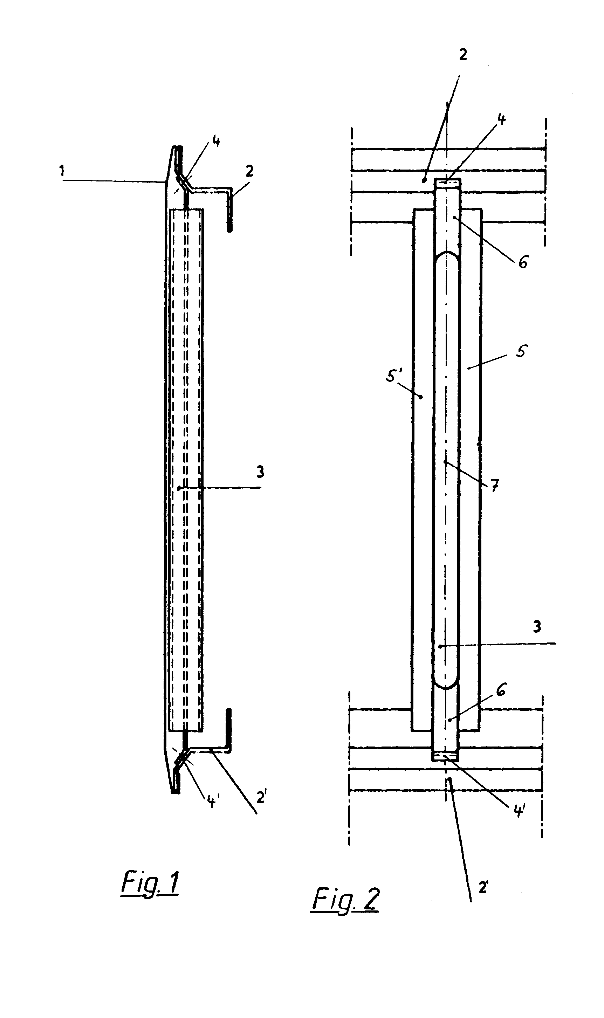

Fig. 1    einen erfindungsgemäßen Rammschutz, eingebaut in eine Fahrzeugtür in Ansicht von oben.

Fig. 2    den eingebauten Rammschutz, gesehen von außen bei entfernter Türaußenhaut.

Fig. 3    bis 8 diverse Varianten eines erfindungsgemäßen Rammschutzes.

Der Rammschutz 3 ist zwischen den Türholmen 2, 2' in der Tür, dicht hinter der Türaußenhaut 1 durch die Verschraubungen 4, 4' angebracht. Die beiden übereinander liegenden Profile 5, 5' des Rammschutzes 3 sind durch den zwischen ihnen befindlichen Teil 6, 6' miteinander verbunden. Diese Teile 6, 6' befinden sich im Bereich der Enden der Profile 5, 5' und überragen sie in ihrer Längserstreckung. In diesen Teilen 6, 6' sind auch die Verschraubungen 4, 4' zu den Türholmen 2, 2' angebracht. Die Teile 6, 6' sind mit ihren, über die Profile 5, 5' ragenden Teil nach außen zur Längsachse 7 des Rammschutzes 3 abgewinkelt, wodurch der eingebaute Träger platzsparend in der Tür untergebracht ist.

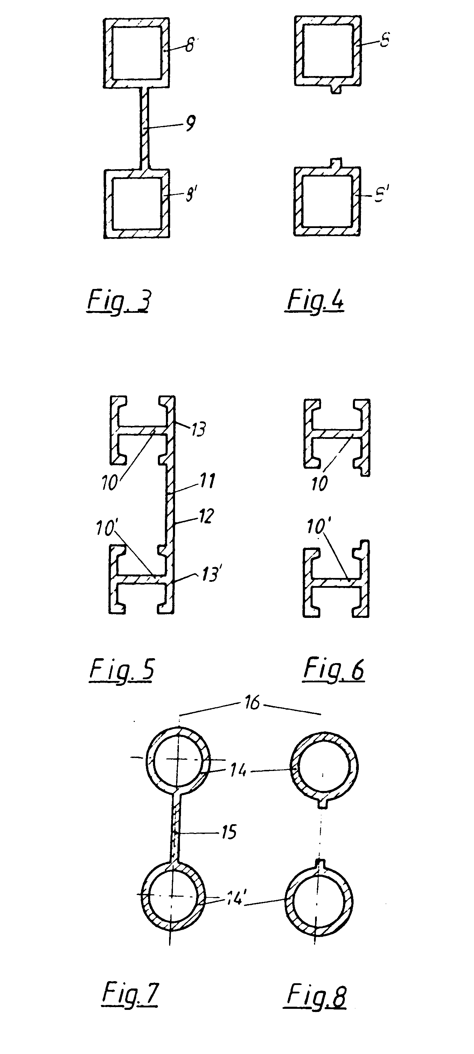

Die Fig. 3 und 4 zeigen einen Querschnitt durch einen erfindungsgemäßen Rammschutz 3, wobei Fig. 3 einen Querschnitt im Bereich der Enden zeigt und die Fig. 4 einen Querschnitt im mittleren Bereich. Der Rammschutz 3 besteht aus zwei übereinander angeordneten Kastenprofilen 8, 8'. Die im Endbereich durch den Verbindungsteil 9 zusammengehalten werden, was in Fig. 3 ersichtlich ist.

Fig. 5 und 6 zeigen eine Variante mit I-Profil 10, 10', die durch den Verbindungsteil 11, dessen Außenseite 12 mit den Außenseiten 13, 13' der I-Profile 10, 10' in einer Ebene liegt. Bei einer solchen Variante ist das Abwinkeln der Überstände unnötig und sie ist besonders einfach herstellbar.

Fig. 7 und 8 zeigen eine Variante mit zwei übereinanderliegenden rohrförmigen Profilen 14, 14', die mit einem in ihrer Symmetrie-Ebene 16 angeordneten Verbindungsteil 15 im Bereich der Enden (Fig. 7) zusammengehalten sind.

**Patentansprüche**

1.    Rammschutz für Türen und Seitenwände von Kraftfahrzeugen, der in horizontaler Lage parallel zur Außenverblechung eingebaut ist, dadurch gekennzeichnet, daß er aus wenigstens zwei im Abstand übereinander angeordneten Profilen (5, 5') besteht, welche wenigstens im Bereich ihrer Enden miteinander verbunden sind.

2. Rammschutz nach Anspruch 1, dadurch gekennzeichnet, daß der Rammschutz (3) einstückig ausgeführt ist und der zwischen den einzelnen Profilen (5, 5') befindliche Teil (6, 6') bis auf den Bereich der Enden der Profile (5, 5') entfernt ist.

3. Rammschutz nach einem der vorhergehenden Ansprüche, dadurch gekennzeichnet, daß die Befestigung am Tür- bzw. Fahrzeugaufbauholm (2, 2') an dem zwischen den Profilen (5, 5') im Endbereich angeordneten Teil (6, 6') erfolgt.

4. Rammschutz nach einem der vorhergehenden Ansprüche, dadurch gekennzeichnet, daß der zwischen den Profilen (5, 5') angeordnete Teil (6, 6') wenigstens an einem Ende in Längserstreckung die Profile (5, 5') überragt und an diesem überragenden Teil (6, 6') die Verbindung mit dem Fahrzeugaufbauholm bzw. Türholm (2, 2') stattfindet.

5. Rammschutz nach einem der vorhergehenden Ansprüche, dadurch gekennzeichnet, daß der die Profile (5, 5') des Rammschutzes (3) in Längserstreckung überragende Teil (6, 6') im Winkel zur Längserstreckung steht und nach außen weist.

6. Rammschutz nach einem der vorhergehenden Ansprüche, dadurch gekennzeichnet, daß die Tangenten an eine jeweils vertikale Außenseite (13, 13') der Profile (5, 5') und die vertikale Außenseite (13, 13') des, die Profile (5, 5') verbindenden Teiles (6) in einer Ebene liegen.

_Fig. 1_

_Fig. 2_

_Fig. 3_    _Fig.4_

_Fig.5_    _Fig.6_

_Fig.7_    _Fig.8_

Europäisches
Patentamt

# EUROPÄISCHER RECHERCHENBERICHT

Nummer der Anmeldung

EP    91 10 1592

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4948196 (BABA ET AL.) <br> * Zusammenfassung; Figuren 1, 3 * <br> --- | 1 | B60J5/04 |
| A | EP-A-0395621 (AUSTRIA METALL AG.) <br> * Ansprüche 1, 2; Figuren 1, 2 * <br> --- | 1, 2 | |
| A | US-A-4684166 (KANODIA) <br> * Figuren 1, 3 * <br> --- | 1 | |
| A | US-A-4090734 (INAMI ET AL.) <br> * Figuren 1, 2 * <br> --- | 1 | |
| D,A | US-A-3868141 (JOHNSON) <br> * Figuren 1, 2 * <br> ----- | 1 | |

|  | RECHERCHIERTE SACHGEBIETE (Int. Cl.5 ) |
|---|---|
|  | B60J |

Der vorliegende Recherchenbericht wurde für alle Patentansprüche erstellt

| Recherchenort | Abschlußdatum der Recherche | Prüfer |
|---|---|---|
| BERLIN | 05 NOVEMBER 1991 | BECKER W.D.H. |

EPO FORM 1503 03.82 (P0403)